# EUROPEAN PATENT APPLICATION

(11) **EP 2 557 833 A1**
(43) Date of publication of application: **13.02.2013**
(21) Application number: 11765606.6
(22) Date of filing: 30.03.2011
(51) Int. Cl.: H04W 16/26, H04B 7/208, H04W 72/04

(54) **WIRELESS RELAY STATION DEVICE, WIRELESS BASE STATION DEVICE, AND RELAY FREQUENCY ALLOCATION METHOD**

(30) Priority: 05.04.2010 JP 2010087265
(71) Applicant: NTT DOCOMO, INC., Chiyoda-ku Tokyo 100-6150 (JP)
(72) Inventor: NAGATA, Satoshi, Tokyo 100-6150 (JP); ABE, Tetsushi, Tokyo 100-6150 (JP); MIKI, Nobuhiko, Tokyo 100-6150 (JP); TAKAHASHI, Hideaki, Tokyo 100-6150 (JP); IWAMURA, Mikio, Tokyo 100-6150 (JP)
(74) Representative: HOFFMANN EITLE
(86) International application number: PCT/JP2011/057960
(87) International publication number: WO 2011/125706

(57) **Abstract**

To control a radio link capacity in a backhaul link optimally, and to enhance a throughput in an access link, in the radio communications system using the relay transmission technology. A relay frequency allocation method according to the present invention includes: determining whether or not carrier aggregation is to be applied in a backhaul link from a radio base station apparatus to a mobile terminal device under the command of the radio base station apparatus, and/or an access link from a radio relay station apparatus to a mobile terminal device under the command of the radio relay station apparatus; allocating a frequency band for transmitting a downlink signal in the backhaul link and/or the access link, when applying the carrier aggregation; and transmitting the downlink signal with the allocated frequency band in the backhaul link and/or the access link.

## Description

### Technical field

The present invention relates to a radio relay station apparatus, a radio base station apparatus and a relay frequency allocation method each using relay transmission technology in a Long Term Evolution-Advanced (LTE-A) system.

### Background art

In 3^{rd} Generation Partnership Project (3GPP), standardization of LTE-Advanced (LTE-A) has been advanced as a fourth generation mobile communication system for achieving an additional high speed and high-capacity communication from Long Term Evolution (LTE) which is a developed standard of third generation mobile communication system. LTE-A has addressed an important problem for a cell end user to improve in a throughput, in addition to achieving of such a high speed and high-capacity communication, and relay technology for relaying a radio transmission between a radio base station apparatus and a mobile terminal device has been studied as a means for solving such a problem. It is expected that it can also enlarge coverage ^{ef}ficiently by using the relay, even at a location where securing of a wire backhaul link is difficult.

In the relay technology, there are a layer 1 relay, a layer 2 relay, and a layer 3 relay. The layer 1 relay is relay technology called a booster or a repeater, and is Amplifier and Forward (AF) type relay technology for performing power amplification of a downlink received RF signal from a radio base station apparatus and transmitting the amplified downlink received RF signal to a mobile terminal device. An uplink received RF signal from a mobile terminal device is also subjected to the power amplification similarly to be transmitted to a radio base station apparatus. The Layer 2 relay is Decode and Forward (DF) type relay technology for coding and modulating the downlink received RF signal from the radio base station apparatus again after demodulating and decoding, and transmitting the coded and modulated downlink received RF signal to the mobile terminal device. The layer 3 relay is relay technology for reproducing user data after decoding the downlink received RF signal from the radio base station apparatus, in addition to a demodulating process and a decoding process, and then executing processes for transmitting the user data over the radio again (e.g., a secrecy process, a dividing/coupling process of the user data, etc.), and transmitting the coded/modulated user data to the mobile terminal device. Nowadays, in 3GPP, standardization with regard to the layer 3 relay technology has been advanced from viewpoints of improving in receiving characteristics due to noise elimination, reviewing of standard specification, and simplicity of implementation.

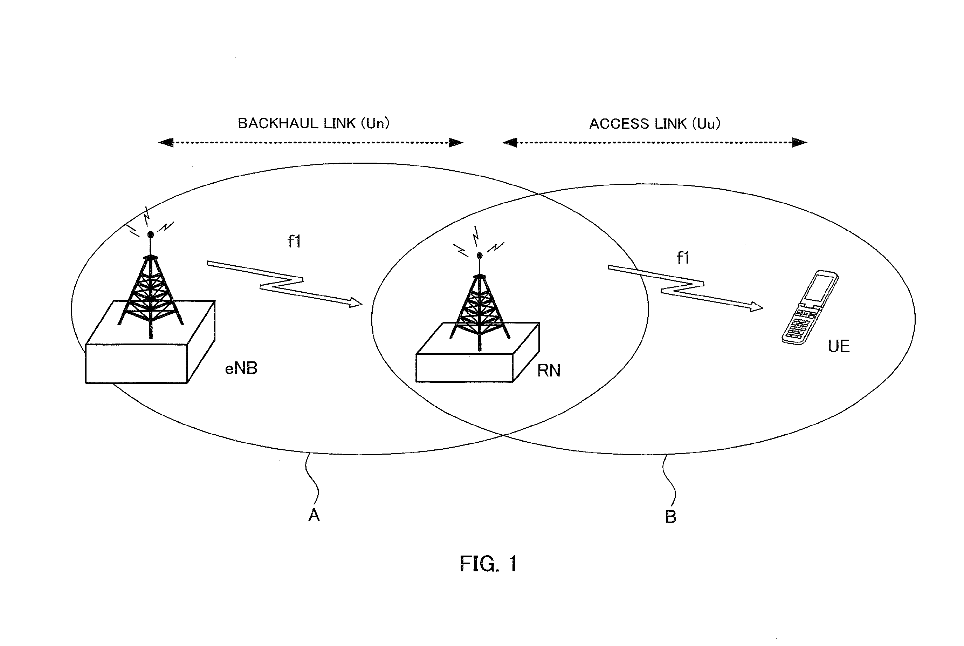

Fig. 1 is a diagram showing a brief overview of radio relay technology using the layer 3 relay. The radio relay station apparatus (Relay Node (RN) ) of layer 3 relay has a specific cell ID (Physical Cell ID (PCI)) different from that of the radio base station apparatus (evolved Node B (eNB)), in addition to executing a reproducing process, a modulation and demodulation process, and a coding and decoding process of user data. Accordingly, the mobile terminal device (User Equipment (UE)) recognizes a cell B provided by the radio relay station apparatus as a cell different from a cell A provided by the radio base station apparatus. Moreover, since a control signal of physical layers (e.g., Channel Quality Indicator (CQI) and Hybrid Automatic Repeat reQuest (HARQ)) is terminated at the radio relay station apparatus, the radio relay station apparatus is recognized as a radio base station apparatus, as seen from the mobile terminal device. Accordingly, even the mobile terminal device having only a function of LTE can be connected to the radio relay station apparatus.

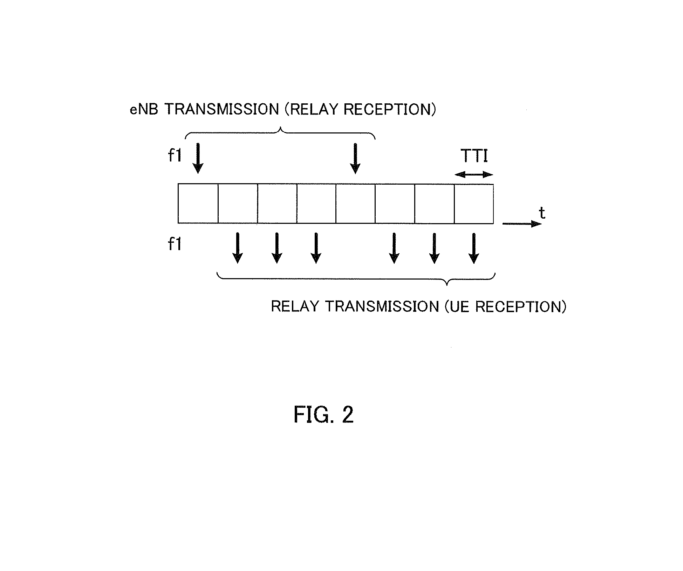

Moreover, it is assumed that a backhaul link (Un) between the radio base station apparatus and the radio relay station apparatus and an access link (Uu) between the radio relay station apparatus and the mobile terminal device is operated on a different frequency or the same frequency. In the case of the latter, if the radio relay station apparatus executes a transmission process and a reception process simultaneously, a transmitted signal is wrapped around a receiver of the radio relay station apparatus, unless sufficient isolation is securable in a transmitting and receiving circuit, and thereby causing interference. Accordingly, in the case of operation on the same frequency (f1) as shown in Fig. 2, it is necessary to perform Time Division Multiplexing (TDM) of radio resources of the backhaul link and the access link (eNB transmission and relay transmission), and control so that the transmission process and the reception process are not simultaneously executed in the radio relay station apparatus (Refer to Non Patent Literature 1.). Accordingly, the radio relay station apparatus cannot transmit a downlink signal to the mobile terminal device, during reception of a downlink signal from the radio base station apparatus, in the downlink, for example.

### Citation List

### Non-patent literature

Non Patent Literature 1: 3GPP, TR36.814

### Summary of the invention

### Technical problem

In a radio communications system using the relay transmission technology mentioned above, it is desired that a radio link capacity in the backhaul link is controlled optimally, and a throughput in the access link is enhanced.

The present invention is achieved in consideration of the above mentioned point, and an object thereof is to provide a radio relay station apparatus, a radio base station apparatus and a relay frequency allocation method each of which can control a radio link capacity in the backhaul link optimally and enhance a throughput in the access link, in the radio communications system using the relay transmission technology.

### Solution to problem

A radio relay station apparatus according to the present invention configured such that there are provided: a determination means for determining whether or not carrier aggregation is to be applied in a access link from the radio relay station apparatus to a mobile terminal device under the command of the radio relay station apparatus; an allocation means for allocating a frequency band for transmitting a downlink signal in the access link, when applying the carrier aggregation; and a transmitting means for transmitting the downlink signal with the allocated frequency band in the access link.

A radio base station apparatus according to the present invention is configured such that there are provided: a determination means for determining whether or not carrier aggregation is to be applied in a backhaul link from a radio base station apparatus to a mobile terminal device under the command of the radio base station apparatus, and/or an access link from a radio relay station apparatus to a mobile terminal device under the command of the radio relay station apparatus; an allocation means for allocating a frequency band for transmitting a downlink signal in the backhaul link and/or the access link, when applying the carrier aggregation; and a transmitting means for transmitting the downlink signal with the allocated frequency band in the backhaul link and/or the access link.

A relay frequency allocation method according to the present invention is configured such that there are provided: determining whether or not carrier aggregation is to be applied in a backhaul link from a radio base station apparatus to a mobile terminal device under the command of the radio base station apparatus, and/or an access link from a radio relay station apparatus to a mobile terminal device under the command of the radio relay station apparatus; allocating a frequency band for transmitting a downlink signal in the backhaul link and/or the access link, when applying the carrier aggregation; and transmitting the downlink signal with the allocated frequency band in the backhaul link and/or the access link.

### Technical advantage of the invention

In the present invention, it is configured to determine whether or not the carrier aggregation is applied in the backhaul link from a radio base station apparatus to a mobile terminal device under the command of the radio base station apparatus, and/or the access link from a radio relay station apparatus to a mobile terminal device under the command of the radio relay station apparatus; allocate a frequency band for transmitting a downlink signal in the backhaul link and/or the access link when applying the carrier aggregation; and transmit the downlink signal in the backhaul link and/or the access link with the allocated frequency band. Accordingly, in the radio communications system using the relay transmission technology, the radio link capacity in the backhaul link is controlled optimally, and thereby the throughput in the access link can be enhanced.

### Brief description of the drawings

Fig. 1 is a diagram for explaining relay transmission technology;
Fig. 2 is a diagram for explaining radio resources of a backhaul link and an access link;
Fig. 3 is a diagram for explaining carrier aggregation;
Fig. 4 is a diagram for explaining an example of a relay frequency allocation method according to an embodiment of the present invention;
Fig. 5 is a diagram for explaining another example of the relay frequency allocation method according to the embodiment of the present invention;
Fig. 6 is a block diagram showing a schematic structure of a radio base station apparatus according to an embodiment of the present invention; and
Fig. 7 is a block diagram showing a schematic structure of a mobile terminal device according to an embodiment of the present invention.

### Description of embodiments

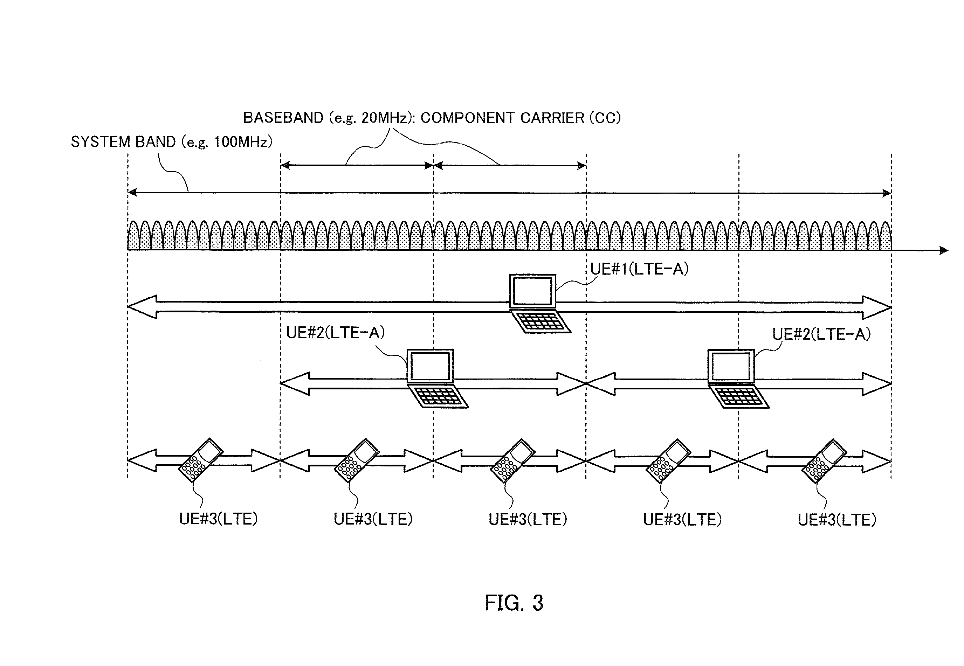

Hereinafter, embodiments of the present invention will now be described in detail with reference to the accompanying drawings.
In the LTE-A system, a frequency usage band as shown in Fig. 3 is adopted so that backward compatibility with the LTE system can be maintained. Fig. 3 is a diagram for explaining a frequency usage condition at the time when mobile communications is performed along the downlink. The example shown in Fig. 3 corresponds to a frequency usage condition that the LTE-A system and the LTE system coexist. The LTE-A system is a first mobile communication system having a relatively wide first system band composed of a plurality of component carriers (CC). The LTE system is a second mobile communication system having a relatively narrow second system band (composed of one component carrier, in this case). Radio communications are performed with a variable system bandwidth of not more than 100 MHz in the LTE-A system, and radio communications are performed with a variable system bandwidth of not more than 20 MHz in the LTE system, for example. The system band of the LTE-A system is at least one fundamental frequency region (component carrier (CC) ) to which the system band of the LTE system is applied as one unit. To achieve broader bandwidth by integrating a plurality of the fundamental frequency regions into one piece in this manner is named as carrier aggregation.

For example, as shown in Fig. 3, the system band of the LTE-A system is a system band including five component carrier bands to which the system band (baseband: 20 MHz) of the LTE system is applied as one component carrier (20 MHz x 5 = 100 MHz). In Fig. 3, a mobile terminal device UE (User Equipment) #1 is a mobile terminal device having a system band of 100 MHz to support the LTE-A system (to support also the LTE system), a mobile terminal device UE#2 is a mobile terminal device having a system band of 40 MHz (20 MHz x 2 = 40 MHz) to support the LTE-A system (to support also the LTE system), and a mobile terminal device UE#3 is a mobile terminal device having a system band of 20 MHz (baseband) to support the LTE system (not to support the LTE-A system).

The present inventors paid their attention to this carrier aggregation, and found out that a radio link capacity in the backhaul link can be controlled optimally and a throughput in the access link can be enhanced by applying such carrier aggregation to radio communications system using the relay transmission technology, thereby achieving the present invention.

In the present invention, it is configured to determine whether or not the carrier aggregation is to be applied in the backhaul link from a radio base station apparatus to a mobile terminal device under the command of the radio base station apparatus, and/or the access link from a radio relay station apparatus to a mobile terminal device under the command of the radio relay station apparatus; allocate a frequency band for transmitting a downlink signal in the backhaul link and/or the access link when applying the carrier aggregation; and transmit the downlink signal in the backhaul link and/or the access link with the allocated frequency band.

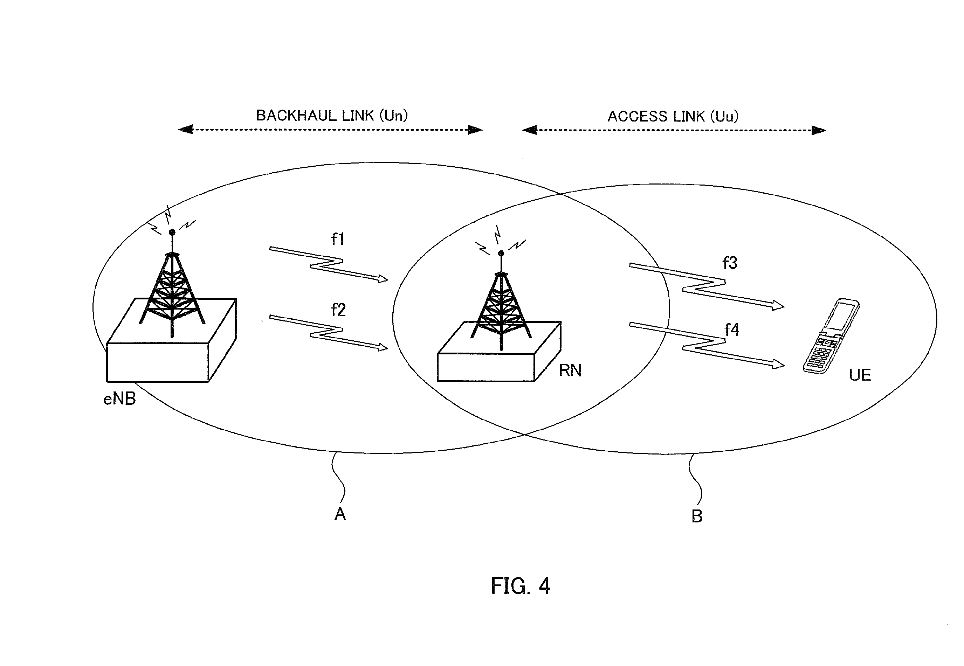

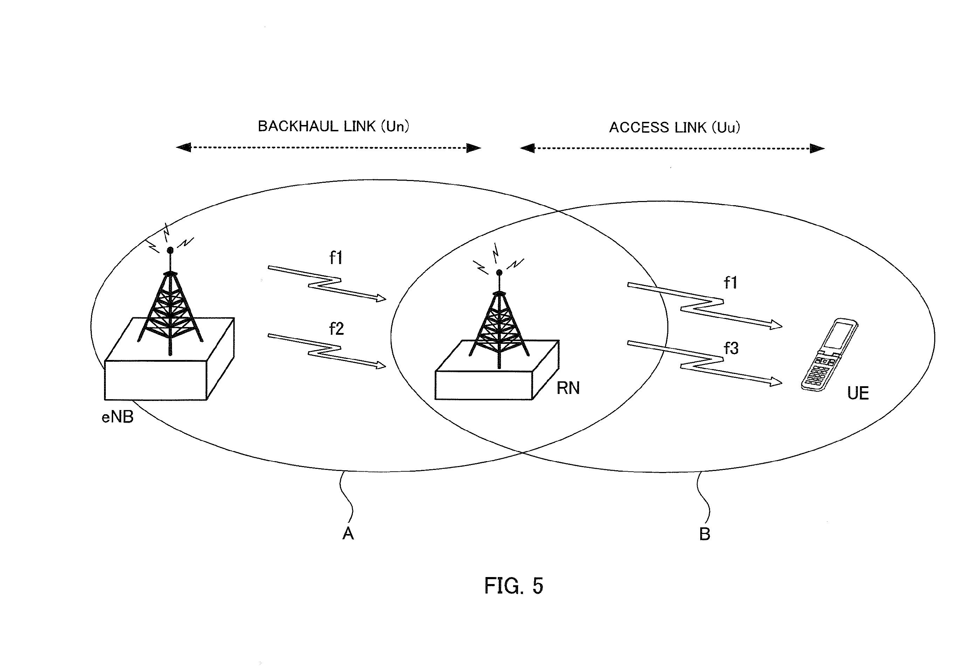

In this case, as shown in Fig. 4, the backhaul link (Un) bandwidths (in this case, component carrier (CC)) f1 and f2 may be different from the access link (Uu) bandwidths (in this case, component carrier (CC)) f3 and f4. As shown in Fig. 5, the backhaul link (Un) bandwidths (CC) f1 and f2 and the access link (Uu) bandwidths (CC) f1 and f3 may be partially equivalent to each other. Moreover, the backhaul link (Un) bandwidths (CC) and the access link (Uu) bandwidths (CC) may be all equivalent to each other.

In this case, whether or not the carrier aggregation is to be applied in the backhaul link and/or the access link is determined based on applicability determination information which is information for determining applicability of carrier aggregation. In this case, information used for the applicability determination information can be listed as follows: the number of mobile terminal devices; an amount of radio resources allocated to a mobile terminal device; the number of MBSFN sub-frames used for relay transmission; a buffer state in a radio relay station apparatus; a propagation channel state of a mobile terminal device under the command of a radio relay station apparatus, and/or a propagation channel state of a mobile terminal device under the command of a radio base station apparatus; a frequency band of the backhaul link and/or a frequency band of the access link from a radio base station apparatus to a radio relay station apparatus; and a propagation channel state of the backhaul link and/or a propagation channel state of the access link from a radio base station apparatus to a radio relay station apparatus.

### (1) When the Number of Mobile Terminal Devices is used as Applicability Determination Information

In this case, the radio relay station apparatus determines whether or not the carrier aggregation is to be applied in the access link, based on the number of the mobile terminal devices under the command of the radio relay station apparatus. Moreover, the radio base station apparatus determines whether or not the carrier aggregation is to be applied in the backhaul link and/or the access link, based on the number of the mobile terminal devices (relay UE) under the command of the radio relay station apparatus (relay node (RN)) and/or the number of the mobile terminal devices (macro UE) under the command of the radio base station apparatus (macro eNB).

For example, a radio link capacity of the backhaul link (or the access link) can be increased (a user throughput can be enhanced) by applying the carrier aggregation when the number of the relay UEs is increased, and a radio link capacity of the backhaul link (or the access link) can be decreased (a user throughput can be reduced) without applying the carrier aggregation when the number of the relay UEs is decreased. Note that, when controlling application of the carrier aggregation in the radio base station apparatus, information indicating the number of the relay UEs may be notified via higher layer signaling from the radio relay station apparatus to the radio base station apparatus as required.

### (2) When Amount of Radio Resources allocated to Mobile Terminal Device is used as Applicability Determination Information

In this case, the radio relay station apparatus determines whether or not the carrier aggregation is to be applied in the access link, based on an amount of radio resources allocated to the mobile terminal device under the command of the radio relay station apparatus. Moreover, the radio base station apparatus determines whether or not the carrier aggregation is to be applied in the backhaul link and/or the access link, based on an amount of the radio resources allocated to the relay UE and/or an amount of the radio resources allocated to the macro UE.

For example, a radio link capacity of the backhaul link (or the access link) can be increased (a user throughput can be enhanced) by applying the carrier aggregation when the amount of the radio resources allocated to the relay UE is increased, and a radio link capacity of the backhaul link (or the access link) can be decreased (a user throughput can be reduced) without applying the carrier aggregation when the amount of the radio resources allocated to the relay UE is decreased. Note that, when controlling application of the carrier aggregation in the radio base station apparatus, information indicating the amount of the radio resources allocated to the relay UE may be notified via higher layer signaling from the radio relay station apparatus to the radio base station apparatus as required.

### (3) When the Number of MBSFN Sub-Frames used for Relay Transmission is used as Applicability Determination Information

In this case, the radio relay station apparatus determines whether or not the carrier aggregation is to be applied in the access link, based on the number of MBSFN sub-frames of the access link. Moreover, the radio base station apparatus determines whether or not the carrier aggregation is to be applied in the backhaul link and/or the access link, based on the number of the MBSFN sub-frames of the access link and/or the number of the MBSFN sub-frames of the backhaul link. As used herein, the MBSFN sub-frame is a backhaul sub-frame for providing simultaneous distribution services (Multimedia Broadcast Multicast Service (MBMS)) of broadcast contents to plenty of users via a single frequency network (MBMS over a Single Frequency Network (MBSFN)).

For example, the number of radio sub-frames by which data can be transmitted to the mobile terminal device can be increased by applying the carrier aggregation to the access link when the number of the MBSFN sub-frames of the access link is six, and frequency resources can be utilized efficiently without applying the carrier aggregation when the number of the MBSFN sub-frames is zero. Accordingly, it becomes possible to perform the relay transmission optimally (and efficiently) by taking restrictions of the number of the MBSFN sub-frames into consideration in this manner. Note that, when controlling application of the carrier aggregation in the radio base station apparatus, information indicating the number of the MBSFN sub-frames of the access link may be notified via higher layer signaling from the radio relay station apparatus to the radio base station apparatus as required.

### (4) When Buffer State in Radio Relay Station Apparatus is used as Applicability Determination Information

In this case, the radio relay station apparatus determines whether or not the carrier aggregation is to be applied in the access link, based on a buffer state in the radio relay station apparatus. Moreover, the radio base station apparatus determines whether or not the carrier aggregation is to be applied in the backhaul link and/or the access link, based on the buffer state in the radio relay station apparatus.

For example, more radio resources can be allocated to the radio relay station apparatus by applying the carrier aggregation to the backhaul link when the buffer of the radio relay station apparatus is in a state near an empty space, and an amount of the radio resources allocated to the radio relay station apparatus can be restricted without applying the carrier aggregation to the backhaul link when the buffer of the radio relay station apparatus is in a state near an overflow state. Moreover, for example, the buffer of the radio relay station apparatus can be more quickly expended by applying the carrier aggregation to the access link when the buffer of the radio relay station apparatus is in the state near the overflow state, and an amount of the radio resources allocated to the mobile terminal device can be restricted without applying the carrier aggregation to the backhaul link when the buffer of the radio relay station apparatus is in the state near the empty space. Accordingly, it becomes possible to perform the relay transmission optimally (efficiently) by taking the buffer state of the radio relay station apparatus into consideration in this manner. Note that, when controlling application of the carrier aggregation in the radio base station apparatus, information indicating the buffer state may be notified via higher layer signaling from the radio relay station apparatus to the radio base station apparatus.

### (5) When Propagation Channel State of Relay UE and/or Propagation Channel State of Macro UE are used as Applicability Determination Information

In this case, the radio relay station apparatus determines whether or not the carrier aggregation is to be applied in the access link, based on a propagation channel state of the relay UE. Moreover, the radio base station apparatus determines whether or not the carrier aggregation is to be applied in the backhaul link and/or the access link, based on a propagation channel state of the relay UE and/or a propagation channel state of the macro UE.

For example, more radio resources can be allocated to the radio relay station apparatus and/or the mobile terminal device by applying the carrier aggregation when the propagation channel state (receiving quality) of the relay UE and/or the propagation channel state (receiving quality) of the macro UE are low level, and the frequency resources can be utilized efficiently without applying the carrier aggregation when the propagation channel state (receiving quality) of the relay UE and/or the propagation channel state (receiving quality) of the macro UE are high level. Accordingly, it becomes possible to perform the relay transmission optimally (efficiently) by taking the propagation channel state of the relay UE and/or the propagation channel state of the macro UE into consideration in this manner. Note that, when controlling application of the carrier aggregation in the radio base station apparatus, information indicating the propagation channel state of the relay UE may be notified via higher layer signaling from the radio relay station apparatus to the radio base station apparatus as required.

### (6) When Frequency Band of Backhaul Link and/or Frequency Band of Access Link are used as Applicability Determination Information

In this case, the radio relay station apparatus determines whether or not the carrier aggregation is to be applied in the access link, based on a frequency band of the access link. Moreover, the radio base station apparatus determines whether or not the carrier aggregation is to be applied in the backhaul link and/or the access link, based on a frequency band of the backhaul link and/or a frequency band of the access link.

For example, more radio resources can be allocated to the radio relay station apparatus and/or the mobile terminal device by applying the carrier aggregation to the backhaul link and/or the access link when the frequency band of the backhaul link and/or the frequency band of the access link are narrow, and frequency resources can be utilized efficiently without applying the carrier aggregation when the frequency band of the backhaul link and/or the frequency band of the access link are broad. Accordingly, it becomes possible to perform the relay transmission optimally (efficiently) by taking the frequency band of the backhaul link and/or the frequency band of the access link into consideration in this manner. Note that, when controlling application of the carrier aggregation in the radio base station apparatus, information indicating the frequency band of the access link may be notified via higher layer signaling from the radio relay station apparatus to the radio base station apparatus as required.

### (7) When Propagation Channel State of Backhaul Link and/or Propagation Channel State of Access Link are used as Applicability Determination Information

In this case, the radio relay station apparatus determines whether or not the carrier aggregation is to be applied in the access link, based on a propagation channel state of the access link. Moreover, the radio base station apparatus determines whether or not the carrier aggregation is to be applied in the backhaul link and/or the access link, based on a propagation channel state of the backhaul link and/or a propagation channel state of the access link.

For example, more radio resources can be allocated to the radio relay station apparatus and/or the mobile terminal device by applying the carrier aggregation when the propagation channel state of the backhaul link and/or the propagation channel state of the access link are low level, and frequency resources can be utilized efficiently without applying the carrier aggregation when the propagation channel state of the backhaul link and/or the propagation channel state of the access link are high level. Accordingly, it becomes possible to perform the relay transmission optimally (efficiently) by taking the propagation channel state of the backhaul link and/or the propagation channel state of the access link into consideration in this manner. Note that, when controlling application of the carrier aggregation in the radio base station apparatus, information indicating the propagation channel state of the access link may be notified via higher layer signaling from the radio relay station apparatus to the radio base station apparatus as required.

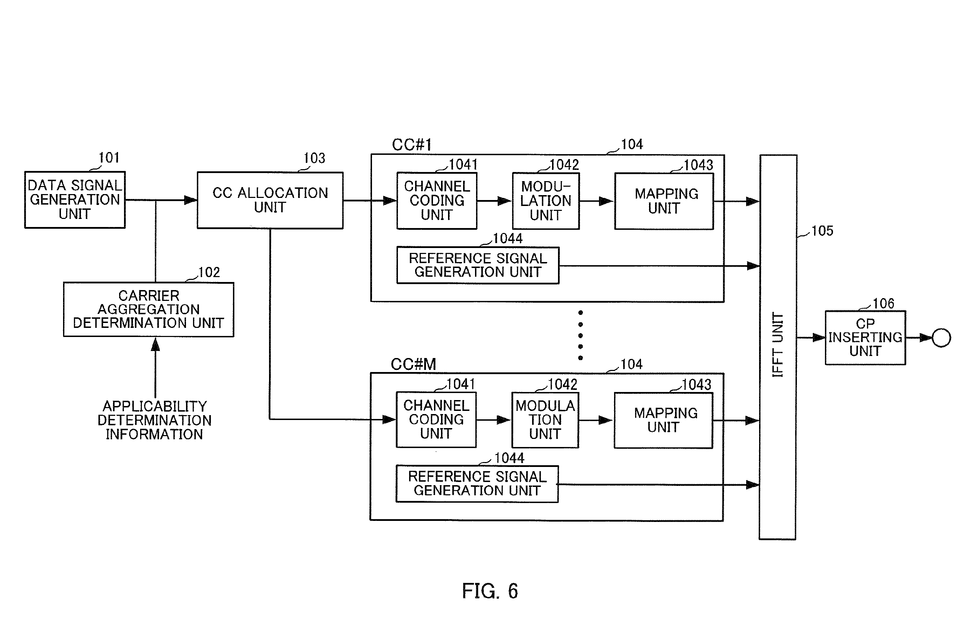

Fig. 6 is a block diagram showing a schematic structure of a radio base station apparatus (radio relay station apparatus) according to an embodiment of the present invention. The radio base station apparatus (radio relay station apparatus) shown in Fig. 6 includes a transmitting unit and a receiving unit. Here, only the transmitting unit side will be explained.

The radio base station apparatus shown in Fig. 6 is mainly composed of: a data signal generation unit 101; a carrier aggregation determination unit 102; a CC allocation unit 103; a signal processing unit 104 ; an Inverse Fast Fourier Transform (IFFT) unit 105; and a Cyclic Prefix (CP) inserting unit 106.

The data signal generation unit 101 generates a downlink data signal to be transmitted to the relay node, and a downlink data signal to be transmitted to the macro UE. The data signal generation unit 101 outputs these downlink data signals to the signal processing unit 104.

The carrier aggregation determination unit 102 determines whether or not the carrier aggregation is to be applied in the backhaul link and/or the access link. The carrier aggregation determination unit 102 determines whether or not the carrier aggregation is to be applied in the backhaul link and/or the access link based on the applicability determination information which is information for determining applicability of the carrier aggregation. Note that the carrier aggregation determination unit 102 in the radio relay station apparatus determines whether or not the carrier aggregation is to be applied in the access link. When applying the carrier aggregation, the carrier aggregation determination unit 102 outputs the control signal indicating the application of the carrier aggregation to the CC allocation unit 103.

In this case, as mentioned above, information used for the applicability determination information can be listed as follows: the number of the mobile terminal devices; an amount of radio resources allocated to the mobile terminal device; the number of MBSFN sub-frames used for relay transmission; a buffer state in the radio relay station apparatus; a propagation channel state of the relay UE and/or a propagation channel state of the macro UE; a frequency band of the backhaul link and/or a frequency band of the access link; and a propagation channel state of the backhaul link and/or a propagation channel state of the access link.

When applying the carrier aggregation, the CC allocation unit 103 allocates a frequency band (for example, CC) for transmitting a downlink signal along the backhaul link and/or the access link. Specifically, frequency bands f1 and f2 are allocated in the radio base station apparatus in the case shown in Figs. 4 and 5. Frequency bands f3 and f4 are allocated in the radio relay station apparatus in the case shown in Fig. 4, and frequency bands f1 and f3 are allocated in the case shown in Fig. 5. The CC allocation unit 103 outputs such frequency allocation information to each signal processing unit 104.

A plurality of the signal processing units 104 are provided (for each CC (CC#1 to CC#M) in this case), and include respectively a channel coding unit 1041, a modulation unit 1042, a mapping unit 1043 and a reference signal generation unit 1044.

The channel coding unit 1041 performs channel coding of the downlink data signal. The channel coding unit 1041 outputs the channel-coded data signal to the modulation unit 1042. The modulation unit 1042 modulates the channel-coded data. The modulation unit 1042 outputs the modulated data signal to the mapping unit 1043. The mapping unit 1043 maps a frequency domain signal to a subcarrier based on resource allocation information. The mapping unit 1043 outputs the mapped data signal to the IFFT unit 105. The reference signal generation unit 1044 generates a reference signal, and outputs the reference signal to the IFFT unit 105. The IFFT unit 105 performs an IFFT process for the data signal and the reference signal and converts the signal into a time domain signal. The IFFT unit 105 outputs the signal after the IFFT process to the CP inserting unit 106. The CP inserting unit 106 inserts CP in the signal after the IFFT process. The signal in which CP is inserted is transmitted with the allocated frequency band, along the downlink in the backhaul link (access link).

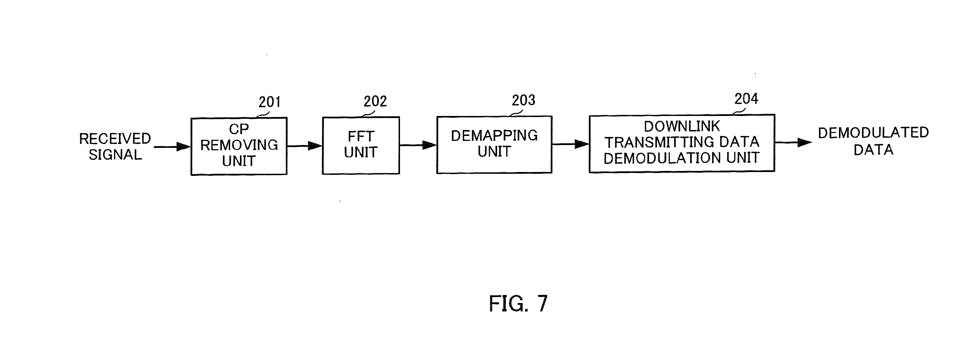

Fig. 7 is a block diagram showing a schematic structure of a mobile terminal device according to an embodiment of the present invention. The mobile terminal device shown in Fig. 7 includes a transmitting unit and a receiving unit. Here, only the receiving unit side will be explained. The receiving unit of the mobile terminal device shown in Fig. 7 includes a CP removing unit 201, a Fast Fourier Transform (FFT) unit 202, a demapping unit 203 and a downlink transmitting data demodulation unit 204.

The CP removing unit 201 removes CP from the received signal. The CP removing unit 201 outputs the signal from which CP is removed to the FFT unit 202. FFT unit 202 performs an FFT process for the signal from which CP is removed. The FFT unit 202 outputs the signal after the FFT process to the demapping unit 203. The demapping unit 203 demaps the signal after the FFT process, and outputs the demapped signal to the downlink transmitting data demodulation unit 204.

In the radio communications system for performing the relay transmission constituted in this manner, the carrier aggregation determination unit 102 of the radio base station apparatus (radio relay station apparatus) determines whether or not the carrier aggregation is to be applied in the backhaul link (or the access link). In this case, the carrier aggregation determination unit 102 determines whether or not the carrier aggregation is to be applied in the backhaul link (or the access link), based on the applicability determination information, which is information for determining the applicability of carrier aggregation. Next, when applying the carrier aggregation, the CC allocation unit 103 allocates a frequency band for transmitting a downlink signal along the backhaul link (or the access link). Then, the downlink signal in the backhaul link (or the access link) is transmitted with the allocated frequency band.

In this manner, according to the present invention, whether or not the carrier aggregation is to be applied in the backhaul link and/or the access link is determined, a frequency band for transmitting a downlink signal in the backhaul link and/or the access link is allocated when applying the carrier aggregation, and the downlink signal in the backhaul link and/or the access link is transmitted with the allocated frequency band. Accordingly, in the radio communications system using the relay transmission technology, the radio link capacity in the backhaul link is controlled optimally, and thereby the throughput in the access link can be enhanced.

The embodiments described herein are to be considered in all respects merely as illustrative and not restrictive. The scope of the invention is indicated by the appended claims rather than the foregoing description, and all changes which come within the meaning and range of equivalents thereof are intended to be embraced therein.

### Industrial applicability

The present invention can be utilized for a radio relay station apparatus, a radio base station apparatus and a relay frequency allocation method of the LTE-A system.

This application is based upon Japanese Patent Application No. 2010-087265 filled on April 5, 2010, the entire contents of which are incorporated herein by reference.

## Claims

1. A radio relay station apparatus comprising:
a determination section configured to determine whether or not carrier aggregation is to be applied in an access link from the radio relay station apparatus to a mobile terminal device under the command of the radio relay station apparatus;
an allocation section configured to allocate a frequency band for transmitting a downlink signal in the access link, when applying the carrier aggregation; and
a transmitting section configured to transmit the downlink signal with the allocated frequency band in the access link.

2. The radio relay station apparatus according to claim 1, wherein the determination section determines whether or not the carrier aggregation is to be applied in the access link based on applicability determination information which is information for determining applicability of the carrier aggregation.

3. The radio relay station apparatus according to claim 2, wherein the applicability determination information is the number of the mobile terminal devices under the command of the radio relay station apparatus.

4. The radio relay station apparatus according to claim 2, wherein the applicability determination information is an amount of radio resources allocated to the mobile terminal device under the command of the radio relay station apparatus.

5. The radio relay station apparatus according to claim 2, wherein the applicability determination information is the number of MBSFN sub-frames used for relay transmission.

6. The radio relay station apparatus according to claim 2, wherein the applicability determination information is a buffer state in the radio relay station apparatus.

7. The radio relay station apparatus according to claim 2, wherein the applicability determination information is a propagation channel state of the mobile terminal device under the command of the radio relay station apparatus, and/or a propagation channel state of the mobile terminal device under the command of the radio base station apparatus.

8. The radio relay station apparatus according to claim 2, wherein the applicability determination information is a frequency band of the backhaul link from the radio base station apparatus to the radio relay station apparatus and/or a frequency band of the access link.

9. The radio relay station apparatus according to claim 2, wherein the applicability determination information is a propagation channel state of the backhaul link from the radio base station apparatus to the radio relay station apparatus and/or a propagation channel state of the access link.

10. A radio base station apparatus comprising:
a determination section configured to determine whether or not carrier aggregation is to be applied in a backhaul link from a radio base station apparatus to a mobile terminal device under the command of the radio base station apparatus, and/or an access link from a radio relay station apparatus to a mobile terminal device under the command of the radio relay station apparatus;
an allocation section configured to allocate a frequency band for transmitting a downlink signal in the backhaul link and/or the access link, when applying the carrier aggregation; and
a transmitting section configured to transmit the downlink signal with the allocated frequency band in the backhaul link and/or the access link.

11. A relay frequency allocation method comprising:
determining whether or not carrier aggregation is to be applied in a backhaul link from a radio base station apparatus to a mobile terminal device under the command of the radio base station apparatus, and/or an access link from a radio relay station apparatus to a mobile terminal device under the command of the radio relay station apparatus;
allocating a frequency band for transmitting a downlink signal in the backhaul link and/or the access link, when applying the carrier aggregation; and
transmitting the downlink signal with the allocated frequency band in the backhaul link and/or the access link.

12. The relay frequency allocation method according to claim 11, wherein whether or not the carrier aggregation is to be applied in the backhaul link and/or the access link is determined based on applicability determination information which is information for determining applicability of the carrier aggregation.
